(19) Europäisches Patentamt
European Patent Office
Office européen des brevets

(11) Veröffentlichungsnummer: **0 047 027**
**A1**

(12) **EUROPÄISCHE PATENTANMELDUNG**

(21) Anmeldenummer: **81200671.6**

(22) Anmeldetag: **16.06.81**

(51) Int. Cl.³: **G 02 F 1/137**
C 09 K 3/34, C 09 B 5/62
C 09 B 3/14, C 09 B 3/78
C 07 C 13/62

(30) Priorität: **22.08.80 CH 6344/80**
**23.04.81 CH 2671/81**

(43) Veröffentlichungstag der Anmeldung:
**10.03.82 Patentblatt 82/10**

(84) Benannte Vertragsstaaten:
**CH DE FR GB LI NL**

(71) Anmelder: **BBC Aktiengesellschaft Brown, Boveri & Cie.**

**CH-5401 Baden(CH)**

(72) Erfinder: **Osman, Maged A., Dr.**
**Lerchenrain 1**
**CH-8046 Zürich(CH)**

(72) Erfinder: **Zeller, Hans-Rudolf, Dr.**
**Hinterhofstrasse 373**
**CH-5242 Birr(CH)**

(72) Erfinder: **Markert, Jürgen, Dr.**
**Im Guntengarten 32**
**CH-4107 Ettingen(CH)**

(54) **Flüssigkristallmischung.**

(57) Die Flüssigkristallmischung für elektrooptische Anzeigen, welche nach dem Guest/Host-Prinzip arbeiten, enthält eine nematische Flüssigkristallmasse als Wirt-Phase und mindestens einen in der Flüssigkristallmasse gelösten pleochroitischen Farbstoff als Gast-Phase; der in der Flüssigkristallmasse gelöste pleochroitische Farbstoff besteht mindestens aus einer Perylenverbindung der Formel (1):

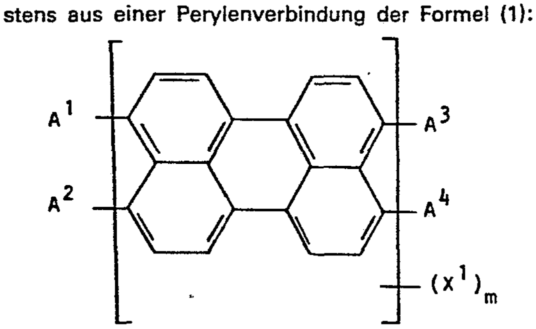

(1)

in der $A^1$, $A^2$, $A^3$ und $A^4$ gleich oder verschieden sind und Wasserstoffatome oder einwertige Substituenten bedeuten oder wobei $A^1$ und $A^2$ gemeinsam oder/und $A^3$ und $A^4$ gemeinsam eine zweiwertige Gruppe der Formeln (1a, 1b)

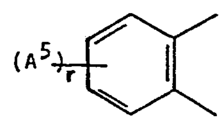

(1a)

oder

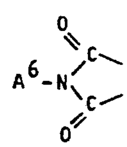

(1b)

darstellen, $X^1$ und $A^5$ einwertige Substituenten sind, $A^6$ das Wasserstoffatom oder einen einwertigen Substituenten bedeutet, m Null oder eine Zahl grösser als Null und nicht grösser als 8 und r Null oder eine Zahl grösser als Null und nicht grösser als 4 ist.

EP 0 047 027 A1

0047027
7880
33/81
23.4.81
Rit

# Flüssigkristallmischung

Die Erfindung betrifft Flüssigkristall-(FK)-mischungen für elektrooptische Anzeigen (Anzeigezellen), die nach dem Guest/Host-Prinzip wie im folgenden erläutert arbeiten und kurz auch als GH-Anzeigen bezeichnet werden.

Bei Anzeigezellen mit flüssigkristalliner dielektrischer Phase ist es bekannt, den elektrooptischen Effekt der Anzeige durch Einlagerung von dichroitischen oder pleochroitischen Farbstoffen als "Guest", d. h. als "Gast-Phase", in einer flüssigkristallinen Matrix als "Host", d. h. als "Wirt-Phase", zu erzeugen (siehe Heilmeier, G. H. et al, Molec. Cryst. and Liq. Cryst. 8, 1969, 293-304). Die Farbstoffmoleküle der Gast-Phase werden hierbei von der einbettenden Wirt-Phase, in der sie gelöst sind, entsprechend dem anliegenden elektrischen Feld orientiert und zeigen wegen ihrer pleochroitischen Eigenschaften je nach Orientierung eine unterschiedliche Lichtabsorption. Im Unterschied zu normalen Farbstoffen hängt die von pleochroitischen Farbstoffen absorbierte Lichtmenge von der Orientierung ihrer Moleküle zum elektrischen Feldvektor des einfallenden Lichtes ab. Durch Anlegen eines elektrischen Feldes auf die in einer Zelle als dünne Schicht verteilte FK-Mischung werden die nematischen Flüssigkristalle der Wirt-Phase und zusammen mit diesen die als Gast-Phase eingelagerten pleochroitischen Farbstoffe umorientiert, was zu einer Aenderung der Lichtabsorption führt.

Als Beispiele von pleochroitischen bzw. dichroitischen Farbstoffen sind Indophenolblau, Indigoderivate, Azo- und Anthrachinonfarbstoffe beschrieben.

Seit den grundlegenden Arbeiten von Heilmeier sind zahlreiche Entwicklungen und Verbesserungen von GH-Anzeigen bekannt geworden. Bei der ursprünglich von Heilmeier beschriebenen Anzeigezelle hat der nematische Flüssigkristall eine gleichmässige Ausrichtung parallel zu den Zellenplatten, wenn keine Spannung an den Elektroden anliegt; diese Guest/Host-Mischung besteht aus einem Farbstoff mit positivem Dichroismus als Gast-Phase und einer nematischen Wirt-Phase mit positiver dielektrischer Anisotropie (im folgenden auch kurz DKA genannt). Für diesen Anzeigetyp wird ein Polarisator benötigt. Von Uchida et al (Molec. Cryst. and Liq. Cryst., 54, 1979, 161-174) wurde eine Modifikation der Heilmeier'schen Zelle mit dem Vorteil einer schärferen Schwelle und steilerem Uebergang zur Sättigung beschrieben. Der Unterschied gegenüber der Heilmeier'schen Zelle besteht darin, dass die nematische Struktur bei abgeschalteter Spannung eine Verdrillung um 90° erleidet.

Ferner wurde von den zuletzt genannten Autoren eine GH-Anzeige beschrieben, bei der die nematische Struktur ohne anliegende Spannung nahezu senkrecht zu den Zellenplatten liegt. Hierbei ist die DKA der Wirt-Phase negativ, aber der Gast-Phasen-Farbstoff hat immer noch einen positiven Dichroismus. Dieser Anzeigentyp hat den Vorteil, dass er ein positives Bild oder Muster darstellen kann, z. B. dunkle Ziffern auf einem hellen Hintergrund.

Ein weiterer Typ von GH-Anzeigen, die ebenfalls eine positive Bilddarstellung ermöglichen, wurde von Pelzl et al (Kristall und Technik, 14, 1979, 817) beschrieben. Eine solche Zelle hat im wesentlichen den Aufbau der Heilmeier'schen Zelle und verwendet eine Wirt-Phase mit positiver DKA, aber mit einem Gast-Phasen-Farbstoff, der einen negativen Dichroismus zeigt.

Alle oben beschriebenen Anzeigetypen benötigen für ein annehmbares Kontrastverhältnis eine Polarisationsschicht.

Gemäss einer neueren bekannten Entwicklung, wie sie z. B. in der DE-OS 2 410 557 beschrieben ist, kann auf polarisierende Deckscheiben verzichtet werden, wenn der aus nematischen Flüssigkristallen mit positiver DKA (als Wirt-Phase) und darin (als Gast-Phase) eingelagertem pleochroitischem Farbstoff zusammengesetzten dielektrischen Phase der Anzeige eine relativ geringe Menge, z. B. 1 bis 15 Gew.%, optisch aktives Material - auch als Dotierungsmittel bezeichnet - beigemischt wird, das der Flüssigkristallmasse eine verdrillte innere Struktur verleiht, die als "chirale" oder "cholesterische" Orientierung bezeichnet wird und beispielsweise in der Arbeit von D. L. White und G. N. Taylor mit dem Titel "New Absorptive Mode Reflective Liquid Crystal Display Device" (J. Appl. Physics, Band 45, 1974, Seiten 4718-4723) beschrieben ist. Beispiele für Aufbau und Betrieb einer Anzeigezelle nach diesem Prinzip sind in den DE-OS 2 639 675 und 2 658 568 beschrieben.

In der DE-OS 2 835 863 ist schliesslich eine Modifikation der von White und Taylor vorgeschlagenen Zelle beschrieben, die ebenfalls einen cholesterisch orientierenden Zusatz enthält und ohne Polarisator ein brauchbares Kontrastverhältnis ermöglicht; hierbei ist die DKA der Wirt-Phase aber nicht positiv, sondern negativ und mit einer solchen Anzeige ist wiederum eine positive Darstellung möglich.

In der Fachwelt werden GH-Anzeigen mit cholesterisch orientierter Wirt-Phase und darin als Gast-Phase eingebettetem Farbstoff als "cholesteric guest/host"-("CGH")- oder auch kurz als CGH-Anzeigen bezeichnet; solche CGH-Anzeigen sind insbesondere deswegen vorteilhaft, weil sie sich für kommerzielle Fertigung und Verwendung ohne äussere Polarisatoren eignen und eine ausreichende Kontrastwirkung bei vereinfachtem Zellenaufbau ermöglichen.

Es hat sich gezeigt, dass die Auswahl geeigneter Farbstoffe für die beschriebenen GH-Anzeigen einschliesslich von CGH-Anzeigen kritisch und schwierig ist:
Zunächst müssen die dichroitischen Verhältniswerte solcher Systeme mit Wirt-Phase und darin eingebettetem Farbstoff als Gast-Phase genügend gross sein, um der Anzeige eine ausreichende Helligkeit und ein ausreichendes Kontrastverhältnis zu verleihen. Dabei ist das pleochroitische bzw. dichroitische Verhältnis des Systems als das Verhältnis $a_1/a_2$ derjenigen Extinktionswerte ("Absorbanz") des Farbstoffes definiert, die gemessen werden, wenn ($a_1$) die molekulare Ausrichtung oder Hauptachse der nematischen Wirt-Phase mit eingebettetem Farbstoff als Gast-Phase parallel zum E-Vektor des einfallenden Lichtes liegt und ($a_2$) diese molekulare Ausrichtung senkrecht zum E-Vektor des einfallenden Lichtes liegt. Die Werte von $a_1$ und $a_2$ können in an sich bekannter Weise fotometrisch gemessen werden, wie beispielsweise in der oben genannten Arbeit von White und Taylor beschrieben. Ein Farbstoff hat dann einen positiven Dichroismus, wenn der Wert von $a_1/a_2$ grösser als 1 ist, und einen negativen Dichroismus, wenn sein Wert von $a_1/a_2$ kleiner als 1 ist.

Bei positiv dichroitischen Farbstoffen für GH-Zellen sollte der Wert von $a_1/a_2$ mindestens etwa 5 betragen, um ausreichende Kontraste und Helligkeiten der Anzeige zu gewährleisten; $a_1/a_2$-Werte von 7 oder mehr werden angestrebt.

Ausser dem Extinktionsverhältnis $a_1/a_2$ sind aber zur Verwendung eines Farbstoffes in GH-Anzeigen noch andere Parameter wichtig: Ein Absorptionsmaximum des Farbstoffes muss im Bereich der sichtbaren Wellenlängen, d. h. zwischen 400 und 700 nm, liegen und der Farbstoff muss in der dotierten Wirt-Phase bis etwa 100°C praktisch beständig sein

(a) gegen Wechselspannungen von bis zu 20 V,
(b) gegen Licht bzw. Tageslicht-UV und
(c) gegen die Komponenten der dotierten Wirt-Phase.

Zusammenfassungen der bisher für GH-Anzeigen vorgeschlagenen Farbstoffe finden sich in den oben genannten Publikationen von Heilmeier et al und von White und Taylor, sowie in einer Arbeit von Bloom und Hung, Molec. Cryst. and Liq. Cryst., 40, 1977, 213 ff, ferner in der DE-OS 2 627 215, in einer Publikation von Constant et al, 7th International Liquid Crystal Conference, 1978, und in der Arbeit von R. J. Cox in Molec. Cryst. and Liq. Cryst. 55, 1979, 1-32.

Die meisten bisher für GH-Anzeigen vorgeschlagenen Farbstoffe erfüllen aber die oben genannten Anforderungen nicht in ausreichendem Masse. Insbesondere haben sich die in bezug auf den $a_1/a_2$-Wert und das Absorptionsmaximum an sich zweckmässigen und zur Verwendung in GH-Anzeigen vorgeschlagenen Azofarbstoffe als ungenügend beständig gegen Licht bzw. UV-Licht (zu geringe fotochemische Stabilität) und zum Teil auch als chemisch labil erwiesen. Andererseits haben die meist in der Literatur vorgeschlagenen fotochemisch stabilen Anthrachinonfarbstoffe zu niedrige $a_1/a_2$-Werte, d. h.

zu niedrige dichroitische Verhältniswerte, um niedrige Betriebsspannungen von 3 bis 4,5 V zu ermöglichen; der zuletzt genannten Beschränkung unterliegen rote bis gelbe dichroitische Farbstoffe in besonderem Masse. Beispielsweise zeigen die in der DE-OS 29 02 177 vorgeschlagenen und hervorragend stabilen Anthrachinonfarbstoffe mit Absorptionsmaxima im blauen Bereich vorteilhaft hohe $a_1/a_2$-Werte von 8 oder mehr, während die entsprechenden Farbstoffe mit Absorptionsmaxima im gelben bis roten Bereich $a_1/a_2$-Werte von etwa 7,5 für rote bzw. 4,5 bis 6 für orangene bis gelbe Farbstoffe aufweisen, und zwar jeweils gemessen in einer kommerziell erhältlichen nematischen Phase, wie "RO-TN 403" als Wirt-Phase.

Da für FK-Anzeigen häufig dunkle bzw. schwarze Anzeigefelder erwünscht sind, werden insbesondere auch Mischungen dichroitischer Farbstoffe gesucht, die insgesamt dunkelfarben bzw. "schwarz" absorbieren; solche Schwarzmischungen sind aus blauen, roten und gelben Mischungskomponenten erhältlich. Dabei wären hohe $a_1/a_2$-Werte für alle Komponenten der Mischung, d. h. auch die im gelben bis roten Bereich absorbierenden dichroitischen Farbstoffe, wünschbar.

Aufgabe der Erfindung ist es, eine zur Verwendung für GH-Anzeigen aller oben genannten Typen geeignete Flüssigkristallmischung anzugeben, die in der Gast-Phase mindestens einen pleochroitischen Farbstoff gelöst enthält, der den oben genannten Stabilitätsbedingungen entspricht, im roten bis gelben Bereich des Spektrums absorbiert und einen $a_1/a_2$-Wert von mindestens 7 und vorzugsweise mindestens 8 besitzt.

Es wurde gefunden, dass diese Aufgabe durch Verwendung von Perylenverbindungen der weiter unten angegebenen Formel (1) gelöst werden kann.

Gegenstand der Erfindung ist eine für GH-Anzeigen aller bisher bekannter Typen, d. h. einschliesslich von CGH-Anzeigen, bestimmte Flüssigkristallmischung, die eine nematische Flüssigkristallmasse als Wirt-Phase und mindestens einen in der Wirt-Phase gelösten pleochroitischen Farbstoff, gegebenenfalls gemeinsam mit anderen Farbstoffen, als Gast-Phase enthält; gewünschtenfalls kann die FK-Mischung einen optisch aktiven Zusatz zur cholesterischen Orientierung der Wirt-Phase enthalten. Vorzugsweise besteht die FK-Mischung aus 0,1 bis 30 Gew.% Farbstoff-Gast-Phase, 0 bis 15 Gew.% cholesterischem Zusatz und im übrigen (d. h. zu 55 bis 99,9 Gew.%) aus nematischer FK-Masse, die je nach Wahl eine positive oder negative DKA aufweisen kann. Die Farbstoff-Gast-Phase enthält erfindungsgemäss stets mindestens einen Farbstoff oder mehrere Farbstoffkomponenten der Formel (1), in welchem Fall die Farbstoff-Gast-Phase meist 0,1 bis 5 Gew.% der erfindungsgemässen FK-Mischung ausmacht. Die Farbstoff-Gast-Phase kann zusätzlich einen oder mehrere nicht-pleochroitische(n) Farbstoff(e) oder/und einen oder mehrere Farbstoff(e) mit negativem Dichroismus enthalten, welche(r) in der Mischung ausreichend löslich sind (ist).

Der erfindungsgemäss mindestens als Anteil der Gast-Phase verwendete und in der Wirt-Phase gelöste pleochroitische Farbstoff ist eine Perylenverbindung der Formel (1)

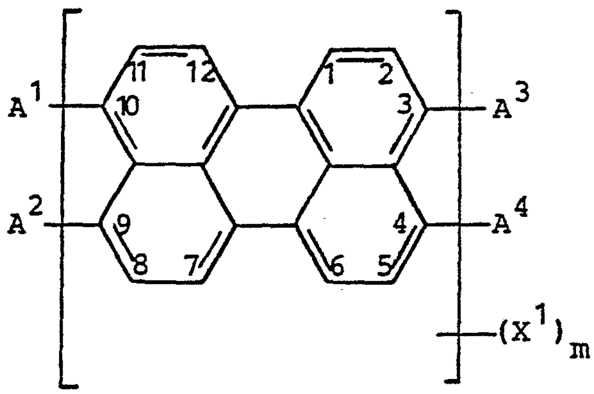

(1)

Die in den Positionen 3, 4, 9 und 10 der Formel (1) stehenden variablen Atome bzw. Gruppen $A^1$ bis $A^4$ können gleich oder verschieden sein und Wasserstoffatome oder Substituenten darstellen; geeignete Substituenten in $A^1$ bis $A^4$ sind entweder einwertig oder es bilden jeweils $A^1$ und $A^2$ zusammen und/oder $A^3$ und $A^4$ zusammen jeweils eine zweiwertige Gruppe der Formeln (1a) oder (1b)

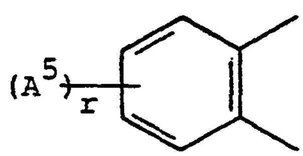

(1a)

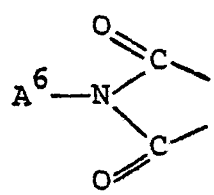

(1b)

$X^1$ und $A^5$ sind gleiche oder unterschiedliche einwertige Substituenten; $A^6$ ist Wasserstoff oder ein einwertiger Substituent. Die Indizes m und r können Null oder Zahlen von grösser als Null bis zur Zahl der Substitutionsstellen in Formel (1) bzw. (1a) darstellen, d.h. m = Null bis 8 und r = Null bis 4. Vorzugsweise beträgt m Null bis 4 und r Null bis 3.

Wenn m >0 ⩽8, dann kann $X^1$ in einer Position oder in mehreren der folgenden Positionen des Perylen-Gerüstes (1) stehen: 1, 2, 5, 6, 7, 8, 11, 12. Der Index m ist nicht notwendigerweise eine ganze Zahl, da es z. B. bei den aus der DE-OS 25 12 516 bekannten Perylen-Verbindungen üblich ist, einen rechnerischen Mittelwert für den gesamten Substitutionsgrad aller Positionen 1/2, 5/6, 7/8 und 11/12 anzugeben. Ganzzahlige Werte von m werden für die Erfindung aber bevorzugt.

Ueberraschenderweise wurde gefunden, dass Verbindungen mit der Perylen-Struktur gemäss Formel (1) dichroitische Farbstoffe im gelben bis roten Bereich mit vergleichsweise sehr hohen dichroitischen Verhältniswerten ($a_1/a_2$) von ⩽7 sind. Dieser der Erfindung zugrundeliegende Befund ist insbesondere deswegen überraschend, weil bestimmte Perylene für permanente Hintergrundschichten von Guest/Host-Anzeigezellen aus der US-PS 4'211'473 bekannt sind; dort wird in der nematischen Wirt-Phase Anthrachinonfarbstoff als Gast-Phase verwendet und die Zelle von aussen mit einer Reflektorschicht belegt, die fluoreszierenden Perylenfarbstoff enthält. Der Perylenfarbstoff ist bei der bekannten Zelle also nicht Teil der Gast-Phase, sondern wird offensichtlich als ungeeignet für die Gast-Phase angesehen. Dieses Vorurteil entspricht auch der bisherigen Auffassung des Standes der Technik, dass verhältnismässig "breite" Moleküle sich zur Einlagerung in die Gast-Phase von GH-FK-Mischungen mangels Fähigkeit zur Einordnung in die relativ stäbchenförmigen Moleküle der Wirt-Phase nicht eignen.

Die Auswahl von einwertigen Substituenten in Formel (1) für $A^1$ bis $A^6$ (bzw. $X^1$, wenn m ≠ Null) kann dazu dienen, die Löslichkeit der Perylenverbindungen (1) in der jeweiligen nematischen Flüssigkristallmasse den Anforderungen entsprechend zu erhöhen.

Die erfindungsgemäss bevorzugten Perylen-Grundstrukturen der Formel (1) entsprechen den folgenden, an sich bekannten Verbindungen:

(a) Perylen (Formel 1: $A^1$ bis $A^4$ = H, m = Null),

(b) Periflanthen (Formel 1: $A^1/A^2$ = (1a), $A^2/A^3$ = (1a), m = r = Null), und

(c) Perylentetracarbonsäureimid, im folgenden auch kurz PTCI genannt (Formel 1: $A^1/A^2$ = (1b), $A^3/A^4$ = (1b), $A^6$ = H, m = Null).

Um die Löslichkeit der Perylenstrukturen (1) in einer gegebenen nematischen Flüssigkristallmasse zu erhöhen, z. B. um eine erfindungsgemäss bevorzugte Löslichkeit (bei Raumtemperatur) von mindestens 0,1 % des Gewichtes der FK-Mischung zu erzielen, können substituierbare Wasserstoffatome der genannten Grundverbindungen (1) erfindungsgemäss durch solche einwertigen Substituenten ersetzt werden, die diese Löslichkeitserhöhung oder "Solvatisierung" bewirken, ohne die oben erwähnten Stabilitätseigenschaften wesentlich zu beeinträchtigen. Die genannten Grundverbindungen selbst erfüllen die Stabilitätskriterien.

Bevorzugte Verbindungen (1) sind solche, in welchen mindestens eines der Zeichen $A^1$ bis $A^4$ einen einwertigen Substituenten bedeutet oder/und m eine positive Zahl ist, bzw. solche mit zweiwertigen Gruppen der Formeln (1a), (1b) als $A^1/A^2$ und $A^3/A^4$, bei welchen r eine positive Zahl bzw. bei welchen $A^6$ einen einwertigen Substituenten bedeutet oder/und m eine positive Zahl ist.

Allgemeine Beispiele einwertiger Substituenten sind einwertige organische Gruppen aus den Klassen der gesättigten (bevorzugt) und ungesättigten Kohlenwasserstoffe einschliesslich von acyclischen oder alicyclischen unsubstituierten oder beispielsweise durch Halogenatome (wie F, Cl, Br, J), Hydroxyl, Alkyl oder Alkoxy, Mercapto, Alkylthio, Sulfonyl und dergleichen substituierte Kohlenwasserstoffe der genannten Gruppen; dabei können die acyclischen oder cyclischen Kohlenstoffketten durch Heteroatome, wie Sauerstoff oder/und Schwefel, oder/und durch sekundären Stickstoff (-NH- oder -N(Alkyl)-) einfach oder mehrfach unterbrochen sein. Auch Aralkylgruppen sowie Alkarylgruppen mit gegebenenfalls durch Heteroatome unterbrochener Kohlenstoffkette kommen in Frage.

Gesättigte Kohlenwasserstoffgruppen, insbesondere solche mit verzweigter und gegebenenfalls durch 1 bis 6 Sauerstoff- oder/und Schwefelatome oder/und Stickstoff unterbrochener Kohlenstoffkette, die gegebenenfalls Phenyl- oder Cyclohexylgruppen enthalten und gegebenenfalls durch die oben genannten Gruppen substituiert sind, eignen sich für viele Zwekke. Eine bevorzugte Gruppe von einwertigen organischen Resten sind Reste der Formel -Z-R, in der Z eine Einfachbindung, das Sauerstoff- oder Schwefelatom, die sekundäre Stickstoff- oder eine Carboxylgruppe ist, wobei R das Wasserstoffatom oder einen Alkylrest mit insgesamt 1 bis 20 C-Atomen in gerader oder vorzugsweise verzweigter und gegebenenfalls durch 1 bis 6 Sauerstoff- oder Schwefelatome unterbrochener Kette bedeutet; der Alkylrest bzw. dessen gegebenenfalls unterbrochene Kette kann z. B. 1 bis 3 Hydroxy-, $C_1$-$C_3$ Alkoxy-, Mercapto- oder $C_1$-$C_3$ Alkylthiogruppen als C-ständige Gruppen tragen und gegebenenfalls eine Phenyl- oder Cyclohexylgruppe enthalten.

Eine Gruppe von bevorzugten einwertigen Substituenten sind Alkylreste mit insgesamt 3 bis 20 C-Atomen in einer verzweigten Kette, die vorzugsweise durch mindestens ein Sauerstoff- oder/und Schwefelatom oder/und sekundären Stickstoff oder/und Phenyl oder Cyclohexyl unterbrochen und gegebenenfalls durch 1 bis 3 Alkyl-(Niederalkyl-), Hydroxy- oder Mercaptogruppen substituiert ist.

0047027
33/81

Eine Gruppe bevorzugter einwertiger Substituenten entspricht der Formel -Alkylen-Y-Alkyl, in der Y das Sauerstoff- oder Schwefelatom oder die sekundäre Stickstoffgruppe ist, wobei die Summe der C-Atome in der Alkylen- und der Alkylgruppe höchstens 20 beträgt und der Alkylenanteil und/oder die Alkylgruppe eine verzweigte Kette hat; spezielle Beispiele für Alkylen in der eben genannten Formel sind Alkylengruppen mit 1 bis 6 C-Atomen, d. h. Methylen, Ethylen, n-Propylen, i-Propylen, die verschiedenen Butylengruppen, die verschiedenen Pentylengruppen und die verschiedenen Hexylengruppen. Beispiele für Alkyl in der eben genannten Formel sind solche mit 3 bis 14 C-Atomen in vorzugsweise verzweigter Kette, wie i-Propyl, sowie die verschiedenen verzweigten Butyl-, Pentyl-, Hexyl-, Heptyl-, Octyl-, Nonyl-, Decyl-, Undecyl-, Dodecyl-, Tridecyl- und Tetradecylgruppen.

Ein spezielles Beispiel für einen einwertigen Substituenten dieser Art ist eine Gruppe der Formel

$$-CH_2CH_2CH_2-O-CH_2\underset{\substack{|\\C_2H_5}}{CH}CH_2CH_2CH_2CH_3.$$

Weiterhin kommen als einwertige Substituenten für $A^1$ bis $A^5$ Halogenatome (F, Cl, Br, J), Hydroxyl-, Nitro-, Nitril- und Aminogruppen in Betracht, die direkt oder über geeignete Brükken mit den C-Atomen der Positionen 3, 4, 9 und 10 verbunden sein können.

Als geeignete Beispiele einwertiger Substituenten $X^1$ sind die eben beschriebenen einwertigen Substituenten zu nennen, die für $A^1$ bis $A^5$ geeignet sind. Gegebenenfalls können solche Substituenten auch über die Carbonylgruppe mit den für $X^1$ vorgesehenen Positionen des Perylengerüstes (1) verbunden sein; allgemein sollten die einwertigen Substituenten für $A^1$ bis $A^5$ und $X^1$ chemisch bzw. photochemisch stabil sein.

Aus Gründen der einfachen Zugänglichkeit bzw. Erhältlichkeit werden für die Erfindung häufig solche Verbindungen der Formel (1) bevorzugt, bei welchen die Solvatisierung hauptsächlich mit Hilfe von Substituenten als Gruppen $A^1$ bis $A^4$ bzw. $A^5$ oder $A^6$ erzielt wird, während m entweder Null ist oder eine Zahl von 1 bis 3 bedeutet und $X^1$ relativ einfache Substituenten, wie Halogenatome, bedeutet.

Da für GH-Anzeigen nematische Wirt-Phasen mit sehr unterschiedlichen Zusammensetzungen in Frage kommen, kann es im speziellen Fall zweckmässig sein, die solubilisierende Wirkung des oder der einwertigen Substituenten in Formel (1) nach den speziellen Gegebenheiten im Rahmen des fachmännischen Wissens zu modifizieren bzw. anhand von einigen wenigen einfachen Versuchen zu prüfen.

Eine erste, erfindungsgemäss bevorzugte spezielle Gruppe von Perylenverbindungen (1) entspricht der Formel (11)

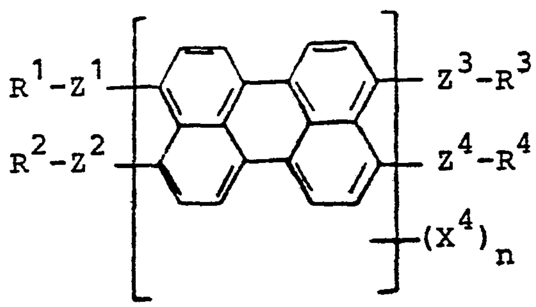

(11)

in der $Z^1$, $Z^2$, $Z^3$ und $Z^4$ gleich oder verschieden sind und geeignete Brücken bedeuten, wie Kovalenzbindungen, zweiwertige Reste der Formeln

$-\overset{\overset{O}{\|}}{C}O-$,

$-\overset{\overset{O}{\|}}{C}S-$,

$-CH_2O-$,

$-CH_2CH_2-$,

$-CH=N-$,

$-\overset{\overset{O}{\|}}{C}\overset{\overset{H}{|}}{N}-$,

$-\overset{\overset{O}{\|}}{C}CH_2-$,

$-\overset{\overset{S}{\|}}{C}CH_2-$,

$-O-$,

$-S-$,

$-\overset{\overset{X'}{|}}{N}-$,

worin X' Wasserstoff oder Niederalkyl mit 1 bis 3 C-Atomen ist; $R^1$, $R^2$, $R^3$ und $R^4$ sind gleiche oder verschiedene Endgruppen bzw. Atome und bedeuten vorzugsweise: (I) Wasserstoffatome; (II) Alkylgruppen mit insgesamt 1 bis 20, vorzugsweise 1 bis 15 C-Atomen in gerader oder vorzugsweise verzweigter, gegebenenfalls durch 1 bis 6 Halogenatome, Hydroxyl-, Methoxy- oder Mercaptogruppen oder Gruppen der Formel -N(X')H substituierter oder/und gegebenenfalls durch 1 bis 6 Sauerstoffatome oder Schwefelatome oder Gruppen der Formel -N(X')- unterbrochener Kohlenstoffkette, die gegebenenfalls ein endständiges Halogenatom oder eine endständige Nitro- oder Nitrilgruppe trägt, oder (III) Gruppen der Formeln (1c) oder (1d)

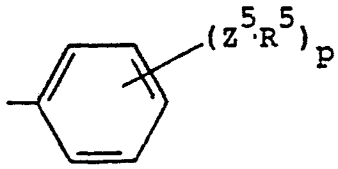

(1c)

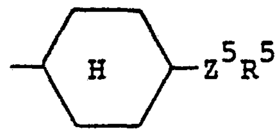

(1d)

worin p Null oder eine Zahl von 1 bis 3 ist, $Z^5$ die für $Z^1$ angegebene Bedeutung und $R^5$ die oben für $R^1$ angegebenen Bedeutungen (I) oder (II) hat; der Cyclohexanring in der Formel (1d) ist vorzugsweise aber nicht notwendigerweise in trans-Konfiguration. Wenn $Z^1$ bis $Z^5$ in Formel (11) Kovalenzbindungen oder zweiwertige Reste der genannten Art mit 2 C-Atomen darstellen, können $R^1$ bis $R^5$ ausserdem Halogenatome, wie Fluor, Chlor, Brom oder Jod, Nitrogruppen oder Nitrilgruppen sein. $X^4$ bedeutet ein Halogenatom, wie eben genannt, die Nitro- oder Nitrilgruppen, die oben angegebene Gruppe $R^1$, die Gruppe $-Z^1-R^1$ oder die Gruppe

$$-\overset{\overset{\displaystyle O}{\|}}{C}R^1;$$

n ist Null oder eine Zahl grösser als Null und nicht grösser als 4, vorzugsweise Null bis 3.

Eine zweite bevorzugte Gruppe von erfindungsgemäss geeigneten speziellen Perylenverbindungen der Formel (1) sind Periflanthene der Formel (12)

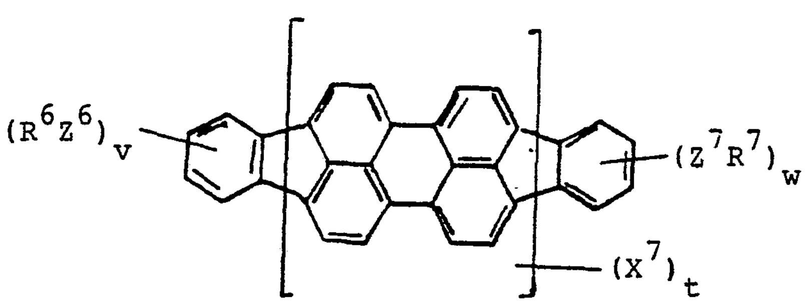

(12)

In der Formel (12) sind $Z^6$ und $Z^7$ gleich oder verschieden und haben allgemein die oben für $Z^1$ angegebene Bedeutung; $R^6$ und $R^7$ sind gleich oder verschieden und haben die oben für $R^1$ angegebene Bedeutung; $X^7$ hat die oben für $X^4$ angegebene Bedeutung; v, w und t sind gleich oder verschieden und bedeuten Null oder Zahlen grösser als Null und nicht grösser als 4; vorzugsweise bedeutet mindestens einer der Indizes v, w, t mindestens 1; ebenfalls bevorzugt werden Verbindungen der Formel (12), bei welchen v = w ≠ Null.

Eine dritte bevorzugte Gruppe von erfindungsgemäss geeigneten Perylenverbindungen der Formel (1) sind die Perylentetracarbonsäureimide der Formel (13)

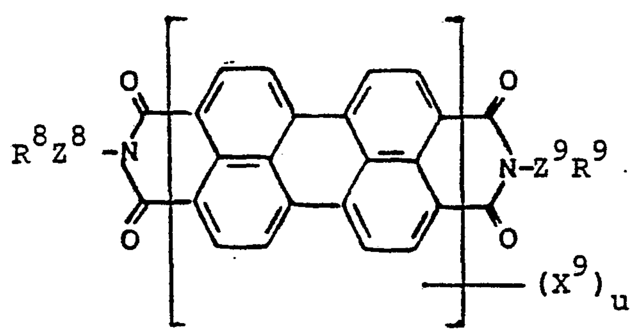

(13)

in der $Z^8$ und $Z^9$ Kovalenzbindungen sind, $R^8$ und $R^9$ gleich oder verschieden sind und vorzugsweise die oben für $R^1$ angegebene Bedeutung haben, $X^9$ allgemein die oben für $X^4$ angegebene Bedeutung hat und u Null oder eine Zahl grösser als Null und nicht grösser als 4 ist; wenn u Null ist, bedeuten $R^8$ und $R^9$ vorzugsweise nicht beide Wasserstoff.

Verbindungen der Formel (1) einschliesslich solcher der Formeln (11), (12) und (13) sind zum Teil an sich z.B. für Synthesefasern oder die Kunststoffmassefärbung bekannt bzw. technisch erhältlich oder können aus bekannten Verbindungen nach an sich üblichen chemischen Modifikationsverfahren erhalten werden.

Perylen, Periflanthen und PTCI sind als solche technisch erhältlich, ebenso verschiedene Carbonsäurederivate, wie z.B. die Perylen-3,9-dicarbonsäure, das Dianhydrid der Perylen-3,4,9,10-tetracarbonsäure und dergleichen.

Zahlreiche Perylenverbindungen dieser Art und ihre Herstellung sind in der DE-OS 25 12 516 beschrieben; beispielsweise kann aus dem gegebenenfalls in einer oder mehreren Position(en) 1, 2, 5, 6, 7, 8, 11, 12 halogenierten (z.B. Chlor, Brom, Jod, Fluor) Dianhydrid der Perylen-3,4,9,10-tetracarbonsäure durch Alkoholyse der entsprechende Tetraalkylester erhalten werden:

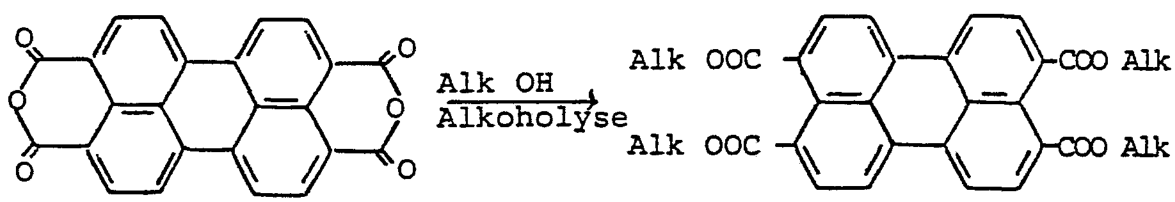


worin "Alk" einen Alkylrest, wie Methyl, Ethyl, n-Propyl, i-Propyl oder einen höheren Alkylrest bedeutet, dessen C-Kette wie oben erläutert modifiziert bzw. substituiert sein kann.

Aus Gründen der kommerziellen Erhältlichkeit geeigneter Verbindungen bzw. Ausgangsstoffe werden dementsprechend unter den Verbindungen der Formel (11) häufig solche bevorzugt, in welchen mindestens zwei der Gruppen $Z^1$ bis $Z^4$ Carboxylgruppen sind, z.B. die 3,9-Carboxyperylenderivate, etwa in Form von Estern.

Durch Veresterung oder Umesterung entsprechender Perylencarbonsäuren können auch die neuen und für viele Zwecke der Erfindung bevorzugten Verbindungen der Formel (14)

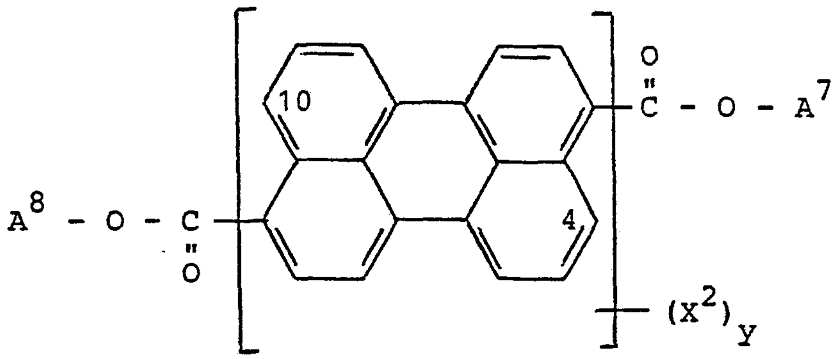

(14)

erhalten werden; $A^7$ und $A^8$ sind dabei gleich oder verschieden und haben allgemein die oben für Formel (11) angegebene Bedeutung (III) von $R^1$, d. h. bedeuten Gruppen der oben angegebenen Formeln (1c) oder (1d); $X^2$ hat die für $X^1$ in Formel (1) oder die für $X^4$ in Formel (11) angegebene Bedeutung und y ist Null oder eine Zahl grösser als Null und nicht grösser als 8, vorzugsweise nicht grösser als 4.

Die Positionen 4 oder/und 10 in Formel (14) können unsubstituiert oder mit $X^2$ besetzt sein. Dementsprechend bedeuten $A^7$, $A^8$ gleiche oder unterschiedliche Gruppen der Formeln (1e) oder (1f)

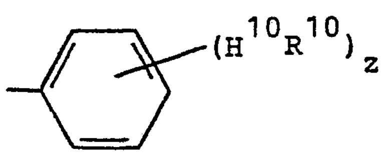

oder

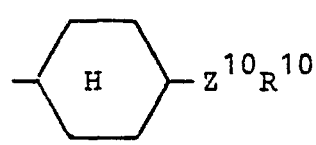

(1e) (1f)

in welchen $Z^{10}$ die oben für $Z^1$ angegebene Bedeutung hat und die Kovalenzbindung oder einen zweiwertigen Rest der Formeln $-C(O)O-$, $-C(O)S-$, $-CH_2O-$, $-CH_2CH_2-$, $-CH{=}N-$, $-C(O)N(H)-$, $-C(O)CH_2-$, $-C(S)CH_2-$, $-O-$, $-S-$ oder $-N(X'')-$, worin X" Wasserstoff oder Niederalkyl mit 1 bis 3 C-Atomen ist, darstellt.

$R^{10}$ hat die oben für $R^1$ angegebene Bedeutung und ist das Wasserstoffatom oder eine Alkylgruppe mit insgesamt 1 bis 20 C-Atomen in gerader oder verzweigter und gegebenenfalls durch 1 bis 6 Halogenatome, Hydroxyl-, Methoxy- oder Mercaptogruppen oder Gruppen der Formel -N(X")H substituierter oder/und gegebenenfalls durch 1 bis 6 Sauerstoffatome oder Schwefelatome oder Gruppen der Formel -N(X")- unterbrochener Kohlenstoffkette, die gegebenenfalls ein endständiges Halogenatom oder eine endständige Nitro- oder Nitrilgruppe trägt; z ist Null oder eine Zahl von 1 bis 3.

Eine bevorzugte Methode zur Herstellung der neuen Verbindungen (14) beruht darauf, dass man die entsprechende 3,9-Perylendicarbonsäure (Formel 14, $A^7 = A^8 = H$) in das entsprechende Disäurehalogenid umwandelt, z.B. mit Thionylchlorid in einem inerten flüssigen Lösungsmittel in das Perylendicarbonsäuredichlorid, und dieses mit dem entsprechenden Phenylderivat oder Cyclohexylderivat (trans-Form bevorzugt) der Formeln (1g) oder (1h)

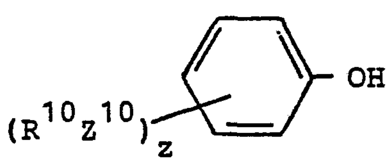

(1g)

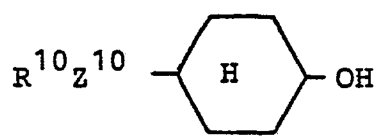

(1h)

kondensiert, z.B. in Gegenwart von Säurebindungsmittel, wie Pyridin.

Gemäss einer bevorzugten Ausführungsform ist z mindestens 1 und para-ständig. Ebenfalls bevorzugt ist $Z^{10}$ die Kovalenzbindung und bedeutet $R^{10}$ einen gemäss obigen Angaben für $A^1$ bzw. $R^1$ (Bedeutung III) modifizierten Alkylrest mit insgesamt 1 bis 15 C-Atomen in gerader oder (vorzugsweise) verzweigter Kette. Die Verbindung der Formel (1h) liegt vorzugsweise in trans-Form vor.

Die Gewinnung von erfindungsgemäss für FK-Mischungen geeigneten Verbindungen der Formel (1) ist jedoch nicht an bestimmte Ausgangsverbindungen oder Modifikationsmethoden gebunden. Beispielsweise kann Periflanthen, die Basisverbindung (12) nach an sich bekannten Verfahren zur Einführung von Kernsubstituenten in aromatische Verbindungen modifiziert werden, z.B. durch Halogenierung und nachfolgende Kondensation.

Perylentetracarbonsäureimid (PTCI), die Basisverbindung der Formel (13), und verschiedene PTCI-Derivate der Formel (13) sind bekannt und zum Teil kommerziell als Textilfarbstoffe erhältlich und können analog wie die bekannten Verbindungen (13) erhalten werden.

Ein Beispiel für eine geeignete Methode zur Herstellung modifizierter Verbindungen (13) ist die von M. Ch. Marschalk in Bull. Soc. Chim., Jahrgang 1935, Seite 1809, bzw. Jahrgang 1937, Seite 184, beschriebene Synthesemethode, die auf der Umsetzung von Imiden (13) unter Ammoniakabspaltung mit entsprechenden Aminverbindungen der Formel $R'-NH_2$ beruht, worin R' die Bedeutung des einzuführenden einwertigen Substituenten hat oder eine in einen solchen umwandelbare Gruppe bedeutet.

Substituent $X^9$ bzw. die Substituenten $X^9$ kann bzw. können wiederum durch übliche Kernsubstitutionsmethoden eingeführt bzw. umgewandelt werden.

Eine andere bekannte Methode zur Herstellung von Verbindungen der Formel (13) beruht auf der Kondensation von Perylentetracarbonsäureanhydrid mit den entsprechenden primären aliphatischen Aminen in hochsiedenden Lösungsmitteln (siehe Encyklopädie der Techn. Chemie, 4. Auflage, 1979, Band 8, Seite 686).

Zur Herstellung erfindungsgemässer FK-Mischungen kann die mindestens teilweise aus Verbindungen der Formel (1) bestehende Farbstoffkomponente in an sich bekannter Weise mit den oben genannten weiteren Komponenten an sich bekannter Art verarbeitet werden, z.B. durch Vermischen und gegebenenfalls Erwärmen der nematischen Komponenten mit der Farbstoffkomponente und gegebenenfalls dem cholesterischen Zusatz; die erhaltenen FK-Mischungen können dann in entsprechende Anzeigezellen, z.B. mit der in der DE-OS 26 39 675 beschriebenen Struktur, eingefüllt werden.

Geeignete nematische Komponenten und cholesterische Zusätze sind, wie erwähnt, bekannt bzw. als technische Produkte erhältlich. Als Beispiel für eine nematische FK-Masse mit positiver DK-Anisotropie sind ausser dem oben genannten Produkt "RO-TN-403" die Produkte "RO-TN-605", "Merck ZLI 1691" und "Merck ZLI 1694" zu nennen. Beispiele für nematische FK-Massen mit negativer DK-Anisotropie sind "Merck ZLI 1735" und "Chisso Lixon EN-24".

Weitere Beispiele für geeignete nematische FK-Massen bzw. cholesterische Zusätze finden sich in der oben genannten Publikation von White und Taylor sowie in den DE-OS 24 10 557 und 26 58 568. Als Beispiele für einen als technisches Produkt erhältlichen cholesterischen Zusatz sind die Substanz "CB15", eine Verbindung der Formel

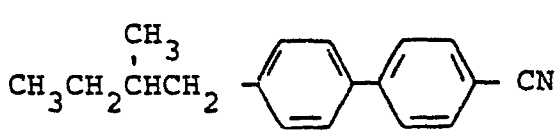

der Firma British Drug House, und der Cholesterinbezoesäureester zu nennen.

Die Erfindung wird anhand der folgenden Beispiele weiter erläutert.

Beispiele 1-23

Die in der folgenden Tabelle I zusammengestellten Perylen-Verbindungen der Formel (1) wurden auf ihren dichroitischen Verhältniswert $a_1/a_2$ untersucht; die erhaltenen Werte sind ebenfalls in Tabelle I angegeben.

Alle Verbindungen der Beispiele 1-12 absorbieren im rot/gelb-Bereich und sind in Mischung mit üblichen nematischen Gast-Phasen sowie unter den Betriebsbedingungen von FK-Anzeigen stabil.

TABELLE I

| Beisp. Nr. | Formel | Perylenfarbstoff (1) Zeichen | $a_1/a_2$** |
|---|---|---|---|
| 1 | (12) | v = w = t = Null | 9,5 |
| 2 | (11) | $Z^2 = Z^3 = -COO-$<br>$Z^1 = Z^4 =$ —— *<br>$R^2 = R^3 =$ 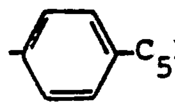 $-C_5H_{11}$<br>$R^1 = R^4 = H$<br>n = Null | 9 |
| 3 | (11) | $Z^2 = Z^3 = -COO-$<br>$Z^1 = Z^4 =$ —— *<br>$R^2 = R^3 =$ 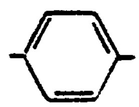 $isoC_3H_7$<br>$R^1 = R^4 = H$<br>n = Null | 9 |
| 4 | (11) | $Z^2 = Z^3 = -COO-$<br>$Z^1 = Z^4 =$ —— *<br>$R^2 = R^3 = -C_9H_{19}$<br>$R^1 = R^4 = H$<br>n = Null | 7,5 |
| 5 | (11) | $Z^1 = Z^2 = Z^3 = Z^4 = -COO-$<br>$R^1 = R^2 = R^3 = R^4 = -CH_3$ | 7 |
| 6 | (13) | $Z^8 = Z^9 =$ —— *<br>$R^8 = R^9 = isoC_{13}H_{27}$<br>u = Null | 9,5 |
| 7 | (13) | $Z^8 = Z^9 =$ —— *<br>$R^8 = R^9 = -(CH_2)_3OCH_2CH(CH_3)_2$<br>u = Null | 9,5 |

0047027
33/81

TABELLE I (Forts.)

| Beisp. Nr. | Formel | Perylenfarbstoff (1) Zeichen | $a_1/a_2$** |
|---|---|---|---|
| 8 | (13) | $Z^8 = Z^9 =$ —— * <br> $R^8 = R^9 = -CH_2CH(CH_2)_3CH_3$ <br> $C_2H_5$ (am CH) <br> u = Null | 8,5 |
| 9 | (13) | $Z^8 = Z^9 =$ —— * <br> $R^8 = R^9 = -C_6H_{13}$ <br> u = Null | 10 |
| 10 | (13) | $Z^8 = Z^9 =$ —— * <br> $R^8 = R^9 = -C_8H_{17}$ <br> u = Null | 10 |
| 11 | (13) | $Z^8 = Z^9 =$ —— * <br> $R^8 = R^9 = -C_{10}H_{21}$ <br> u = Null | 10 |
| 12 | (13) | $Z^8 = Z^9 =$ —— * <br> $R^8 = R^9 = -(CH_2)_3OCH_2CH(CH_2)_3CH_3$ <br> $C_2H_5$ (am CH) <br> u = Null | 9 |
| 13 | (12) | $Z^6 = Z^7 = -C(O)CH_2-$ <br> $R^6 = R^7 = -CH(CH_3)_2-$ <br> $v = w = 1$ <br> t = Null | 9,5 |

TABELLE I (Forts.)

| Beisp. Nr. | Formel | Perylenfarbstoff (1) Zeichen | $a_1/a_2$** |
|---|---|---|---|
| 14 | (11) | $Z^2 = Z^3 =$ -COO-<br>$Z^1 = Z^4 =$ —— *<br>$R^2 = R^3 =$ 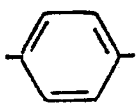 $-C_5H_{11}$<br>$R^1 = R^4 =$ H<br>n = 2,5 ± 1,5<br>$X^4$ = Cl | 9 |
| 15 | (11) | $Z^2 = Z^3 =$ -COO-<br>$Z^1 = Z^4 =$ —— *<br>$R^2 = R^3 =$ 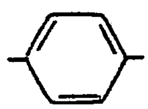 iso $C_3H_7$<br>$R^1 = R^4 =$ H<br>n = 2,5 ± 1,5<br>$X^4$ = Cl | 9 |
| 16 | (13) | $Z^8 = Z^9 =$ —— *<br>$R^8 = R^9 = -(CH_2)_3OCH_2CH(CH_3)_2$<br>u = 2,5 ± 1,5<br>$X^9$ = Cl | 9,5 |
| 17 | (11) | $Z^2$ = -COO-<br>$Z^3$ = -C(O)NH-<br>$Z^1 = Z^4 =$ —— *<br>$R^1 = R^4 =$ H<br>$R^2 = R^3 = -CH_2CH(C_2H_5)(CH_2)_3CH_3$<br>n = Null | 7 |

TABELLE I (Forts.)

| Beisp. Nr. | Formel | Perylenfarbstoff (1) Zeichen | $a_1/a_2$** |
|---|---|---|---|
| 18 | (11) | $Z^2$ = -COO-<br>$Z^3$ = -C(O)NH-<br>$Z^1$ = $Z^4$ = —— *<br>$R^1$ = $R^4$ = H<br>$R^2$ = $R^3$ = $-CH_2CH(C_2H_5)(CH_2)_3CH_3$<br>n = 2,5 ± 1,5<br>$X^4$ = Cl | 7 |
| 19 | (13) | $Z^8$ = $Z^9$ = —— *<br>$R^8$ = $R^9$ = $-CH_2CH(C_2H_5)(CH_2)_3CH_3$<br>u = 2,5 ± 1,5<br>$X^9$ = Cl | 8,5 |
| 20 | (13) | $Z^8$ = $Z^9$ = —— *<br>$R^8$ = $R^9$ = $-C_6H_{13}$<br>u = 2,5 ± 1,5<br>$X^9$ = Cl | 10 |
| 21 | (13) | $Z^8$ = $Z^9$ = —— *<br>$R^8$ = $R^9$ = $-C_8H_{17}$<br>u = 2,5 ± 1,5<br>$X^9$ = Cl | 10 |
| 22 | (13) | $Z^8$ = $Z^9$ = —— *<br>$R^8$ = $R^9$ = $-C_{10}H_{21}$<br>u = 2,5 ± 1,5<br>$X^9$ = Cl | 10 |

TABELLE I (Forts.)

| Beisp. Nr. | Formel | Perylenfarbstoff (1) (Zeichen) | $a_1/a_2$** |
|---|---|---|---|
| 23 | (13) | $Z^8 = Z^9 =$ —— * <br> $R^8 = R^9 = -(CH_2)_3OCH_2CH(CH_2)_3CH_3$ <br> $u = 2,5 \pm 1,5$ <br> $X^9 = Cl$ | 9 |

* "——" bedeutet die Kovalenzbindung

** gemessen in "RO-TN-403", einer technischen nematischen FK-Mischung der Firma Hoffmann-La Roche

Beispiele 24-29

Die Perylenverbindung von Beispiel 12 wurde mit den in der folgenden Tabelle II angegebenen Komponenten in den angegebenen Anteilen zur Herstellung von erfindungsgemässen FK-Mischungen verwendet; in der Tabelle II sind auch die Klärpunkte ($T_c$) angegeben.

TABELLE II

| Beisp. Nr. | (a) nematische Phase (Gew.%) | | (b) CB 15 (Gew.%) | (c) PTCI (Beisp.12) (Gew.%) | $T_c$ (°C) |
|---|---|---|---|---|---|
| 24 | RO-TN-403 | 96,5 | 3 | 0,5 | 82 |
| 25 | " | 95,5 | 4 | 0,5 | 81 |
| 26 | " | 94,5 | 5 | 0,5 | 80 |
| 27 | E 8 | 96,0 | 3 | 1,0 | 73 |
| 28 | " | 95,0 | 4 | 1,0 | 72 |
| 29 | " | 94,0 | 5 | 1,0 | 71 |

Die hier verwendete Perylenverbindung absorbiert im roten Wellenlängenbereich; ihr Extinktionskoeffizient ist etwa fünfmal höher als der eines vergleichbaren Anthrachinonfarbstoffes.

In analoger Weise können die oben beschriebenen Perylenverbindungen der Formel (1), gegebenenfalls auch in Mischungen, für erfindungsgemässe FK-Mischungen mit bekannten nematischen FK-Massen mit oder ohne cholesterischen Zusatz und gegebenenfalls mit bekannten Farbstoffen verwendet werden. Die Perylenverbindungen (1) erweisen sich als gegen Tageslicht-UV bei Temperaturen bis 100°C unter einer Wechselspannung von bis zu 20 V stabil sowie mit den Komponenten (a) und (b) von Tabelle II kompatibel.

Beispiel 30

Dieses Beispiel erläutert die Herstellung der neuen Perylenfarbstoffe der Formel (14).

(a) Das in Beispiel 2 verwendete neue Perylenderivat (Formel 14: $A^7 = A^8 = (1c)$; $z = 1$ (para); $Z^{10}$ = Kovalenzbindung, $R^{10}$ = n-Pentyl) wurde wie folgt hergestellt:

10 mMol 3,9-Perylendicarbonsäure wurden in 10 ml Thionylchlorid und 10 ml Nitrobenzol während 20 min auf Rückfluss erwärmt, dann eingeengt, dreimal mit je 20 ml Toluol versetzt und wiederum eingeengt, um die letzten Reste Thionylchlorid zu vertreiben. Das Säurechlorid wurde in 12 ml Pyridin vorgelegt und unter Rühren mit 20 mMol p-n-Pentylphenol in 6 ml Pyridin versetzt. Das Reaktionsgemisch wurde 2 Std. bei 150°C gerührt, auf Eis/2N HCl gegossen und dreimal mit Methylenchlorid extrahiert. Die organischen Phasen wurden einmal mit 2N NaOH/Eis, einmal mit NaCl-Lösung gewaschen, eingeengt und das Produkt abfiltriert. Das Produkt wurde durch Umkristallisieren aus Ethanol in Form von orangefarbenen Kristallen erhalten, die bei 262°C zu schmelzen beginnen (Rundschmelzen der Kristalle) und bei 292°C als isotrope Schmelze vorliegen; in diesem Schmelzbereich treten mehrere mesomorphe Phasen auf.

(b) In analoger Weise wurde unter Verwendung von p-Isopropylphenol in äquivalenter Menge anstelle von p-n-Pentylphenol die im obigen Beispiel 3 verwendete Verbindung (Formel 14: $A^7 = A^8 = (1c)$, $z = 1$ (para), $Z^{10}$ = Kovalenzbindung, $R^{10}$ = Isopropyl) hergestellt. Die orangefarbenen Kristalle begannen bei 242°C zu schmelzen und lagen bei 281°C als isotrope Schmelze vor.

(c) Nach der in Abschnitt (a) dieses Beispiels beschriebenen Arbeitsweise wurde unter Verwendung von trans-4-n-Pentylcyclohexanol in äquivalenter Menge anstelle des Pentylphenols der neue Perylenfarbstoff (1) hergestellt (Formel 14: $A^7 = A^8 = (1f)$, $Z^{10}$ = Kovalenzbindung, $R^{10}$ = n-Pentyl), der bei 248°C zu schmelzen beginnt und bei 260°C eine isotrope Schmelze bildet.

Die in den Absätzen (a) bis (c) von Beispiel 30 als Ausgangsverbindung verwendete 3,9-Perylendicarbonsäure ist eine bekannte und im Handel erhältliche Verbindung.

0047027
33/81

Erfindungsgemässe FK-Mischungen können wie oben angedeutet auch zwei oder mehr pleochroitische Verbindungen der Formel (1) oder/und eine Mischung von Verbindungen der Formel (1) mit mindestens einem anderen pleochroitischen oder/und nicht-pleochroitischen Farbstoff enthalten, welcher die oben genannten Löslichkeits- und Stabilitätsbedingungen erfüllt. Als andere pleochroitische Farbstoffe werden insbesondere die von der Anmelderin (europäische Patentanmeldung Nr. 80200631.2) beschriebenen Anthrachinonfarbstoffe mit $a_1/a_2$-Werten von mindestens 7,5 bevorzugt, insbesondere um Mischfarben zu erzeugen.

Nicht-pleochroitische Farbstoffe, die sich zur Verwendung als zusätzliche Farbkomponente in der Gast-Phase erfindungsgemässer FK-Mischungen eignen, sind bekannt; ihre Verwendung als zusätzliche Komponente ermöglicht mehrfarbige Anzeigedarstellungen. Wenn man in einer CGH-Zelle beispielsweise eine erfindungsgemässe FK-Mischung mit einer Wirt-Phase mit positiver DKA verwendet, erscheint der angesteuerte Bereich der Anzeige im wesentlichen farblos, während der nicht angesteuerte Bereich die charakteristische Farbe des Farbstoffes (1) bzw. der pleochroitischen Farbmischung hat; enthält diese FK-Mischung aber zusätzlich einen nicht-pleochroitischen Farbstoff, so zeigt in diesem Fall der angesteuerte Bereich die Farbe des nicht-pleochroitischen Farbstoffes, während der nicht angesteuerte Bereich die Mischfarbe des pleochroitischen und des nicht-pleochroitischen Farbstoffes hat.

Bei entsprechender Verwendung einer erfindungsgemässen FK-Mischung mit einer Wirt-Phase mit negativer DKA hat der angesteuerte Bereich die charakteristische Farbe des Farbstoffes (1) bzw. der dieses enthaltenden pleochroitischen Farbmischung, während der nicht angesteuerte Bereich im wesentlichen farblos erscheint; wird hier ein zusätzlicher nichtpleochroitischer Farbstoff verwendet, so zeigt der angesteuerte Bereich die Mischfarbe der pleochroitischen und der nicht-pleochroitischen Farbstoffe, während der nicht angesteuerte Bereich die Farbe der nicht-pleochroitischen Farbstoffe aufweist.

Ferner kann die Farbstoff-Gast-Phase erfindungsgemässer FK-Mischungen zusätzlich zur mindestens teilweise aus Farbstoff (1) bestehenden pleochroitischen Farbstoffkomponente - und gegebenenfalls zusätzlich zu nicht-pleochroitischem Farbstoff bzw. Farbstoffgemisch - einen oder mehrere Farbstoff(e) mit negativem Dichroismus ($a_1/a_2 < 1$) enthalten, z. B. die von D. Demus et al (Molec. Cryst. and Liq. Cryst., 56, 1979, 115-121) beschriebenen Tetrazine der Formel

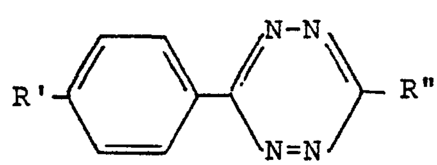

in der R' und R" Alkoxy- bzw. Alkylgruppen sind.

## Patentansprüche

1. Flüssigkristallmischung für elektrooptische Anzeigen, die nach dem Guest/Host-Prinzip arbeiten, welche Flüssigkristallmischung eine nematische Flüssigkristallmasse als Wirt-Phase und mindestens einen in der Flüssigkristallmasse gelösten pleochroitischen Farbstoff als Gast-Phase enthält, dadurch gekennzeichnet, dass mindestens der eine in der Flüssigkristallmasse gelöste pleochroitische Farbstoff eine Perylenverbindung der Formel (1) ist

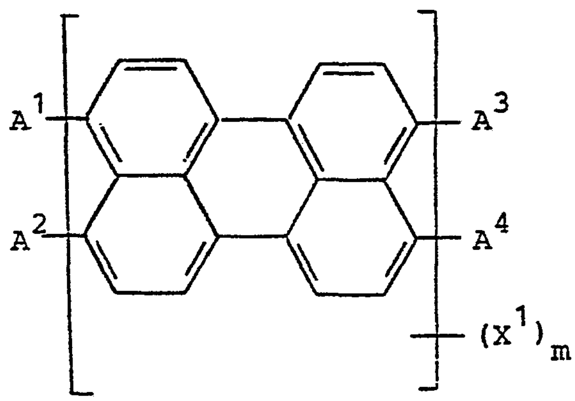

(1)

in der $A^1$, $A^2$, $A^3$ und $A^4$ gleich oder verschieden sind und Wasserstoffatome oder einwertige Substituenten bedeuten oder wobei $A^1$ und $A^2$ gemeinsam oder/und $A^3$ und $A^4$ gemeinsam eine zweiwertige Gruppe der Formeln (1a, 1b)

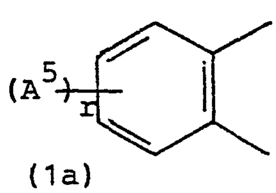

(1a)

oder

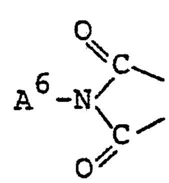

(1b)

darstellen, $X^1$ und $A^5$ einwertige Substituenten sind, $A^6$ das Wasserstoffatom oder einen einwertigen Substituenten bedeutet, m Null oder eine Zahl grösser als Null und nicht grösser als 8 und r Null oder eine Zahl grösser als Null und nicht grösser als 4 ist.

0047027
33/81

2. Mischung nach Patentanspruch 1, dadurch gekennzeichnet, dass die in Formel (1) vorhandenen einwertigen Substituenten gewählt sind, um der Perylenverbindung in der nematischen Flüssigkristallmasse bei Raumtemperatur eine Löslichkeit von mindestens 0,1 Gew.% zu verleihen.

3. Mischung nach Patentanspruch 1 oder 2, dadurch gekennzeichnet, dass die Perylenverbindung (1) der Formel (11)

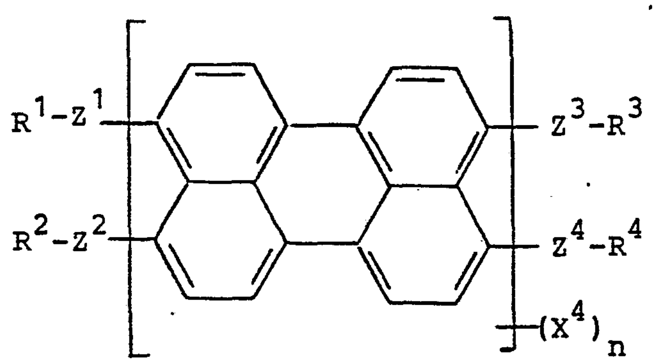

(11)

entspricht, in der $Z^1$, $Z^2$, $Z^3$ und $Z^4$ gleich oder verschieden sind und bedeuten: Kovalenzbindungen, zweiwertige Reste der Formeln -C(O)O-, -C(O)S-, $-CH_2O-$, $-CH_2CH_2-$, -CH=N-, -C(O)N(H)-, $-C(O)CH_2-$, $-C(S)CH_2-$, -O-, -S-, -N(X')-, worin X' Wasserstoff oder Niederalkyl mit 1 bis 3 C-Atomen ist, $R^1$, $R^2$, $R^3$ und $R^4$ gleich oder verschieden sind und bedeuten: (I) Wasserstoffatome, (II) Alkylgruppen mit insgesamt 1 bis 20 C-Atomen in gerader oder verzweigter und gegebenenfalls durch 1 bis 6 Halogenatome, Hydroxyl-, Methoxy- oder Mercaptogruppen oder Gruppen der Formel -N(X')H substituierter oder/und gegebenenfalls durch 1 bis 6 Sauerstoffatome oder Schwefelatome oder Gruppen der Formel -N(X')- unterbrochener Kohlenstoffkette, die gegebenenfalls ein endständiges Halogenatom oder eine endständige Nitro- oder Nitrilgruppe trägt, oder (III) Gruppen der Formeln (1c) oder (1d)

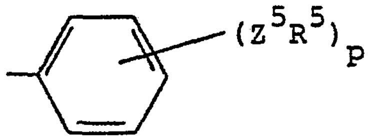

(1c)

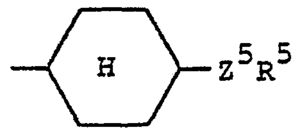

(1d)

sind, worin p Null oder eine Zahl von 1 bis 3 ist, $Z^5$ die für $Z^1$ angegebene Bedeutung und $R^5$ die für $R^1$ angegebenen Bedeutungen (I) oder (II) hat, mit der Massgabe, dass, wenn $Z^1$ bis $Z^5$ Kovalenzbindungen oder zweiwertige Reste mit 2 C-Atomen darstellen, $R^1$ bis $R^5$ ausserdem Halogenatome, Nitrogruppen oder Nitrilgruppen darstellen können; $X^4$ ein Halogenatom, die Nitro- oder Nitrilgruppe, die Gruppe $R^1$, die Gruppe $-Z^1-R^1$ oder die Gruppe $-C(O)R^1$ darstellt, n Null oder eine Zahl grösser als Null und nicht grösser als 4 bedeutet.

4. Mischung nach Patentanspruch 1 oder 2, dadurch gekennzeichnet, dass die Perylenverbindung (1) eine Periflanthenverbindung der Formel (12)

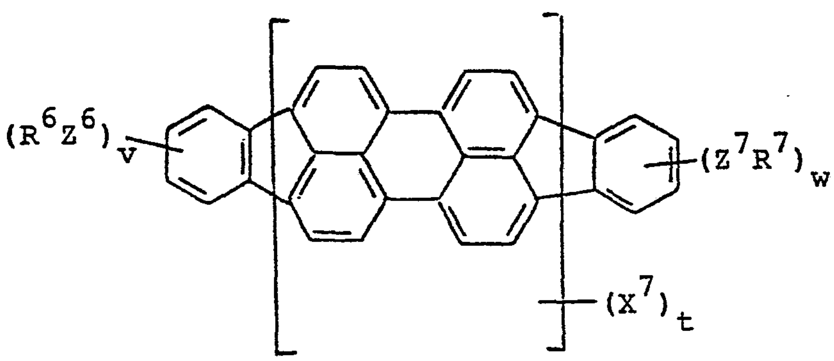

(12)

ist, in der $Z^6$ und $Z^7$ gleich oder verschieden sind und die in Patentanspruch 3 für $Z^1$ angegebene Bedeutung haben, $R^6$ und $R^7$ gleich oder verschieden sind und die in Patentanspruch 3 für $R^1$ angegebene Bedeutung haben, $X^7$ die in Patentanspruch 3 für $X^4$ angegebene Bedeutung hat, v und w gleich oder verschieden und Null oder Zahlen von 1 bis 4

sind und t Null oder eine Zahl grösser als Null und nicht grösser als 4 ist.

5. Mischung nach Patentanspruch 1 oder 2, dadurch gekennzeichnet, dass die Perylenverbindung (1) ein Perylentetracarbonsäureimid der Formel (13) ist

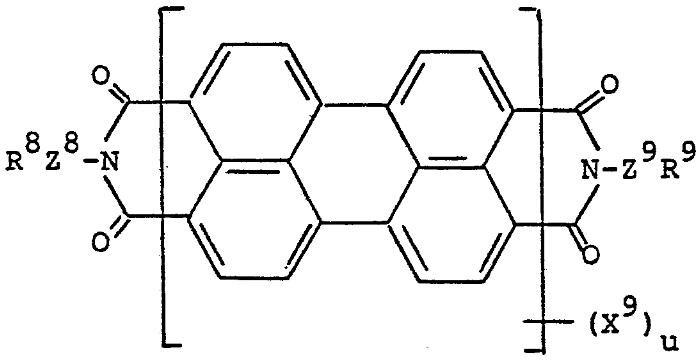

(13)

in der $Z^8$ und $Z^9$ Kovalenzbindungen sind, $R^8$ und $R^9$ gleich oder verschieden sind und die in Patentanspruch 3 für $R^1$ angegebene Bedeutung haben, $X^9$ die in Patentanspruch 3 für $X^4$ angegebene Bedeutung hat und u Null oder eine Zahl grösser als Null und nicht grösser als 4 ist.

6. Mischung nach Patentanspruch 3, dadurch gekennzeichnet, dass mindestens eines der Zeichen $R^1$, $R^2$, $R^3$, $R^4$ die Bedeutung (II) oder (III) hat oder dass n grösser als Null ist.

7. Mischung nach Patentanspruch 6, dadurch gekennzeichnet, dass mindestens eines der Zeichen $Z^1$, $Z^2$, $Z^3$, $Z^4$ die Carboxylgruppe bedeutet.

8. Mischung nach Patentanspruch 6 oder 7, dadurch gekennzeichnet, dass mindestens eines der Zeichen $R^1$, $R^2$, $R^3$, $R^4$ eine Gruppe der Formeln (1c) oder (1d) gemäss Patentanspruch 3 darstellt, wobei p mindestens 1 ist und $R^5$ nicht das Wasserstoffatom bedeutet.

9. Mischung nach Patentanspruch 4, dadurch gekennzeichnet, dass mindestens einer der Indizes v, w, t grösser als Null ist.

10. Mischung nach Patentanspruch 9, dadurch gekennzeichnet, dass $R^6$ oder/und $R^7$ nicht das Wasserstoffatom ist.

11. Mischung nach Patentanspruch 5, dadurch gekennzeichnet, dass $R^8$ oder/und $R^9$ nicht das Wasserstoffatom ist oder/und dass t grösser als Null ist.

12. Mischung nach Patentanspruch 5, dadurch gekennzeichnet, dass $R^8$ und/oder $R^9$ ein Alkylrest mit insgesamt 3 bis 20 C-Atomen in einer verzweigten Kette ist, die durch mindestens ein Sauerstoff- oder/und Schwefelatom oder/und eine Amino- oder Niederalkylaminogruppe unterbrochen und gegebenenfalls durch 1 bis 3 Hydroxy- oder Mercaptogruppen substituiert ist.

13. Mischung nach Patentanspruch 5, dadurch gekennzeichnet, dass $R^8$ und/oder $R^9$ ein Rest der Formel -Alkylen-Y-Alkyl ist, in der Y das Sauerstoffatom oder Schwefelatom oder die Gruppe -N(R')- ist, wobei R' das Wasserstoffatom oder eine $C_1$-$C_3$ Alkylgruppe bedeutet, die Summe der C-Atome in der Alkylen- und der Alkylgruppe höchstens 20 ist und mindestens eine von Alkylen und Alkyl eine verzweigte Kette hat.

14. Mischung nach einem der Patentansprüche 1-13, dadurch gekennzeichnet, dass sie ausserdem einen optisch aktiven Zusatz zur cholesterischen Ordnung der Mischung enthält, vorzugsweise in einem Anteil von 0,5 bis 15 % des Gewichts der Mischung.

15. Mischung nach einem der Patentansprüche 1-14, dadurch gekennzeichnet, dass die Wirt-Phase 80 bis 98,5 Gew.% und die mindestens eine Verbindung der Formel (1) 0,1 bis 5 Gew.% der Mischung ausmacht, wobei die Löslichkeit der Verbindung (1) bzw. der Verbindungen (1) in der Wirt-Phase bei Normaltemperatur mindestens 0,1 Gew.% beträgt.

16. Mischung nach einem der Patentansprüche 1-15, dadurch gekennzeichnet, dass sie zusätzlich mindestens einen anderen pleochroitischen und/oder nicht-pleochroitischen Farbstoff, z. B. in einem Anteil von 0,1 bis 5 Gew.% der Mischung, enthält.

17. Mischung nach einem der Patentansprüche 1-14, dadurch gekennzeichnet, dass die Gast-Phase 0,5 bis 30 Gew.% der Mischung darstellt und zusätzlich zu mindestens einem Farbstoff der Formel (1) mindestens einen anderen pleochroitischen und/oder nicht-pleochroitischen Farbstoff oder/und einen Farbstoff mit negativem Dichroismus enthält.

18. Neue dichroitische Farbstoffe der Formel (14)

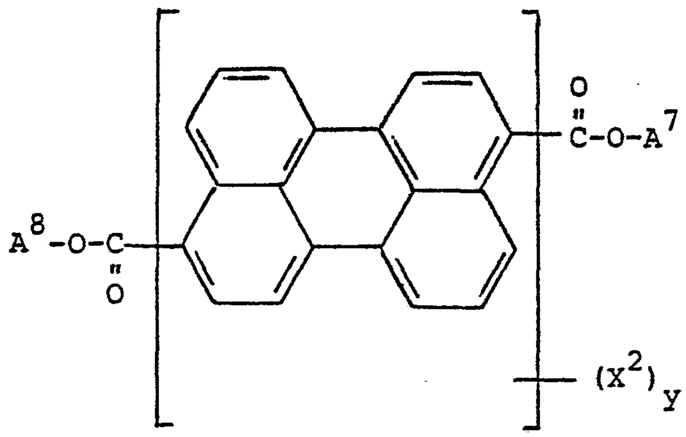

(14)

in der $A^7$ und $A^8$ gleich oder verschieden sind und Gruppen der Formeln (1e) oder (1f)

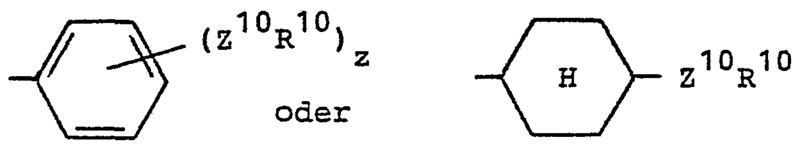

oder

(1e) (1f)

darstellen, in welchen $Z^{10}$ bedeutet: Kovalenzbindungen, zweiwertige Reste der Formeln $-C(O)O-$, $-C(O)S-$, $-CH_2O-$, $-CH_2CH_2-$, $-CH=N-$, $-C(O)N(H)-$, $-C(O)CH_2-$, $-C(S)CH_2-$, $-O-$, $-S-$ oder $-N(X")-$, worin X" Wasserstoff oder Niederalkyl mit 1 bis 3 C-Atomen ist; $R^{10}$ bedeutet: das Wasserstoffatom oder eine Alkylgruppe mit insgesamt 1 bis 20 C-Atomen in gerader oder verzweigter und gegebenenfalls durch 1 bis 6 Halogenatome, Hydroxyl-, Methoxy- oder Mercaptogruppen oder Gruppen der Formel $-N(X")H$ substituierter oder/und gegebenenfalls durch 1 bis 6 Sauerstoff- oder Schwefelatome oder Gruppen der Formel $-N(X")-$ unterbrochener Kohlenstoffkette, die gegebenenfalls ein endständiges Halogenatom oder eine endständige Nitro- oder Nitrilgruppe trägt, wobei z Null oder eine Zahl von 1 bis 3 ist; $X^2$ bedeutet: ein Halogenatom, die Nitro- oder Nitrilgruppe, die Gruppe $R^{10}$, die Gruppe $-Z^{10}-R^{10}$ oder die Gruppe $-C(O)R^{10}$ und y Null oder eine Zahl grösser als Null und nicht grösser als 8 ist.

0047027
33/81

19. Neue Farbstoffe nach Patentanspruch 18, dadurch gekennzeichnet, dass $A^7$ und $A^8$ Gruppen der Formel (1e) darstellen, in der $Z^{10}$ die Kovalenzbindung ist und $R^{10}$ Alkylgruppen mit 1 bis 15 C-Atomen in vorzugsweise verzweigter Kette bedeuten.

20. Neue Farbstoffe nach Patentanspruch 18, dadurch gekennzeichnet, dass $A^7$ und $A^8$ Gruppen der Formel (1f) darstellen, in der $Z^{10}$ die Kovalenzbindung ist und $R^{10}$ Alkylgruppen mit 1 bis 15 C-Atomen in vorzugsweise verzweigter Kette bedeuten.

0047027

Nummer der Anmeldung

Europäisches Patentamt

# EUROPÄISCHER RECHERCHENBERICHT

EP 81 20 0671

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 2 019 026 (THE SECRETARY OF STATE FOR DEFENCE)<br>* Ansprüche 1-9; Seite 2, Zeilen 15-19 * | 1-3,6, 7 | G 02 F 1/137<br>C 09 K 3/34<br>C 09 B 5/62<br>3/14<br>3/78<br>C 07 C 13/62 |
| D | & US - A - 4 211 473<br>-- | | |
| A | FR - A - 2 444 701 (BBC)<br>* Ansprüche 1-12 * | 1 | |
| D | & DE - A - 2 902 177<br>-- | | RECHERCHIERTE SACHGEBIETE (Int. Cl.³) |
| A | EP - A - 0 006 122 (CIBA-GEIGY)<br>* Ansprüche 1-8 *<br>-- | 1 | G 02 F 1/137<br>C 09 K 3/34<br>C 09 B 5/62<br>3/14-3/20<br>3/78-3/80<br>C 07 C 13/62 |
| A | US - A - 4 164 431 (CH.W. TANG)<br>* Ansprüche 1-17; Spalte 6, Zeile 43 *<br>& EP - A - 0 000 829<br>----- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 25-11-1981 | DELANGHE |